# EUROPEAN PATENT APPLICATION

(11) **EP 3 550 451 A1**
(43) Date of publication of application: **09.10.2019**
(21) Application number: 17877236.4
(22) Date of filing: 20.10.2017
(51) Int. Cl.: G06F 17/30

(54) **DATA STORAGE AND MAINTENANCE METHOD AND DEVICE, AND COMPUTER STORAGE MEDIUM**

(30) Priority: 02.12.2016 CN 201611095661
(71) Applicant: Shanghai ZTE Software Co., Ltd., Shanghai 201203 (CN)
(72) Inventor: YANG, Lei, Shanghai 201203 (CN)
(74) Representative: Regimbeau
(86) International application number: PCT/CN2017/107052
(87) International publication number: WO 2018/099202

(57) **Abstract**

A data storage and maintenance method and device, and a computer storage medium, relating to the field of use of resources for data storage and reading in computer software and hardware resource utilization. The method comprises: obtaining source data generated by operation of software (S101); classifying the source data to obtain grid metadata of multiple types (S102); and synthesizing the grid metadata of the same type into a grid data file, and storing and maintaining the grid data file (S103). By means of grid storage of data, efficient storage of the data can be achieved, and data redundancy and repeated storage can be avoided.

## Description

### TECHNICAL FIELD

The present disclosure relates to the field of resource utilization of, for example, data storage and data reading in computer software and hardware resource utilization, and in particular, to a data storage and maintenance method, a data storage and maintenance device, and a computer storage medium.

### BACKGROUND

As various types of softwares become larger and larger, the amount of data also becomes larger and larger with the passage of time. For the data storage and maintenance in a typical software system, it is necessary to consider, e.g., what kinds of data exist in the system, whether the increase of the data amount is able to be satisfied with the initial storage capacity of the system or not, whether all the data is required to be stored in the system or not, and whether all the data is useful or not.

Existing data is mainly classified into the following categories:
1. user data, mainly including user's data files, databases, etc.;
2. data for software running, mainly including software packages, execution files and various configuration files;
3. data generated by software running, mainly including various types of logs, records, etc.; and
4. temporary file, e.g., files temporarily generated in installation and decompressing files. Basically, the first category of data and the second category of data cannot be modified and deleted at will. The fourth category of data is simpler to process and can be deleted after being used.

The storage system is a system in a computer, which includes various storage devices for storing programs and data, control components, and algorithms (software) and devices (hardware) for managing information scheduling. The main memory of the computer cannot meet the requirements of high access speed, large storage capacity and low cost at the same time. Multi-level memorys with speeds from slow to fast and capacities from large to small are required in the computer to optimally control a scheduling algorithm and a reasonable cost, thereby forming a storage system with acceptable performance. With the long-time running and upgrading of the software system, system corruption will occur, that is, the software system generates a large amount of redundant historical data and historical files. In addition, the software system may be subjected to problems of gradually becoming huge, slow operation, excessive resource occupation, low use efficiency and the like due to an inefficient processing mode for ensuring compatibility.

The existing data processing has the following difficulties:
1. inefficient storage, a large amount of redundant data, and repeated storage;
2. arbitrary and inflexible storage and removal strategy; and
3. inefficient lookup and usage.

### SUMMARY

Data storage and maintenance method and device according to an embodiment of the present disclosure solve the above problem in a more reasonable and more natural manner, and can retain a part of key data without occupying excessive memory space.

A data storage and maintenance method provided by an embodiment of the present disclosure includes:
acquiring source data generated by software running;
classifying the source data to obtain multiple categories of grid metadata; and
synthesizing the grid metadata of an identical category into a gridded data file, and storing and maintaining the gridded data file.

A storage medium provided by an embodiment of the present disclosure is arranged for storing programs for realizing the data storage and maintenance method.

A data storage and maintenance device provided by an embodiment of the present disclosure includes:
an acquisition module, arranged to acquire source data generated by software running;
a classification module, arranged to classify the source data to obtain multiple categories of grid metadata; and
a maintenance module, arranged to synthesize the grid metadata of an identical category into a gridded data file and store and maintain the gridded data file.

Embodiments of the present disclosure have the following beneficial effects.
1. According to the embodiments of the disclosure, the data is stored in the gridded manner to realize the high-efficiency storage of the data and to avoid the data redundancy and repeated storage;
2. According to the embodiments of the present disclosure, different cleaning strategies are adopted for different gridded data files to flexibly store and clean the data;
3. According to the embodiments of the present disclosure, the corresponding gridded data file can be searched via key elements or keywords to realize high-efficiency retrieval; and
4. The embodiments of the present disclosure are suitable for storing and maintaining the data generated by software running.

### BRIEF DESCRIPTION OF DRAWINGS

FIG. 1 is a flowchart of a data storage and maintenance method according to Embodiment 1 of the present disclosure;
FIG. 2 is a flowchart of a data storage and maintenance method according to Embodiment 2 of the present disclosure;
FIG. 3 is a schematic diagram of a data storage and maintenance device according to Embodiment 3 of the present disclosure; and
FIG. 4 is a schematic diagram of splitting an original data file after data gridding into new data files according to an embodiment of the present disclosure.

### DETAILED DESCRIPTION

Preferred embodiments of the present disclosure will be described in detail in conjunction with the drawings, and it should be understood that the preferred embodiments described hereinafter are only intended to describe and explain the present disclosure rather than to limit the present disclosure.

The embodiments of the present disclosure adopt a gridded data storage mode to split the content of the data into grids according to different elements, and different grids have different categories of metadata which are stored in different files or memory spaces. In data cleaning, gridded metadata of one certain element can be selected for cleaning. In data searching, a search may be performed on content of metadata of one certain element. Different processing strategies are adopted for different categories of gridded metadata to achieve the aim of finely managing the data. In short, for the same event stream data, the data is split and stored into multiple pieces of data composed of the same elements, which is called the gridding of the data file. Then, different storage strategies, access strategies and deletion strategies are adopted for the metadata corresponding to different elements or keywords, so that the data storage and maintenance is more efficient and the consumption of storage resources is less, and the fine management of the data is realized.

The embodiments of the present disclosure can be applied to a server and is suitable for enterprise software running and maintenance.

### Embodiment 1

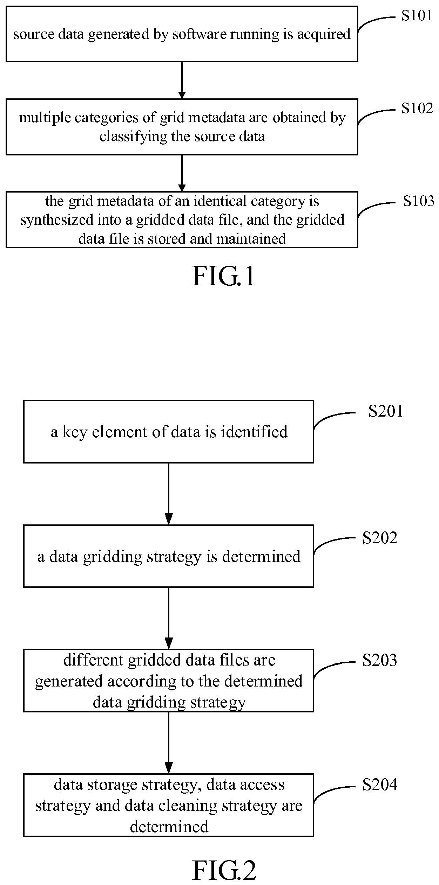

FIG. 1 is a flowchart of a data storage and maintenance method according to Embodiment 1 of the present disclosure. As shown in FIG. 1, the method includes following steps S101 to S103. In step S101, source data generated by software running is acquired.

The source data generated by the software running may be an event stream recorded by a software system, a database record and the like.

In step S102, multiple categories of grid metadata are obtained by classifying the source data.

An analysis is performed on the source data to obtain a key element representing a composition of the source data, and the key element includes at least one of time, operation, module, event, or result that are involved in the software running. And the source data is split into grids according to the key elements to obtain grid metadata.

Following are three modes for splitting the source data into grids.

### 1. splitting by rows

Assuming that the key element is 'state', the source data may be split into grid metadata in a normal state and grid metadata in an abnormal state according to the normal state or the abnormal state of the source data. Corresponding data is stored by rows to form a gridded data file representing the normal state and a gridded data file representing the abnormal state respectively.

### 2. splitting by columns

Assuming that the key elements are "module", "event" and "state", the source data may be split by columns according to the key elements described above, for example, the source data is split into grid metadata corresponding to "module", or the like; or the source data may be split by columns according to any combination of the key elements described above, for example, the source data is split into grid metadata corresponding to "module + event", or the like. Corresponding data is stored by columns to respectively form gridded data files whose file names can reflect key elements.

### 3. mixed splitting mode

Assuming that the key elements are "module", "event" and "state", the source data may be split by rows and by columns according to the key elements described above, and gridded data files may be formed. For example, after splitting the source data by rows and by columns, grid metadata corresponding to "module" and the normal state is synthesized into one gridded data file for storage, and grid metadata corresponding to "event" and the normal state is synthesized into one gridded data file, and the like. It should be noted that pieces of data in an identical row need to be identified by an identical serial number.

In step S103, the grid metadata of an identical category is synthesized into a gridded data file, and the gridded data file is stored and maintained.

The step S103 includes: determining different storage time for different gridded data files according to importance levels of different gridded data files, for example, the storage time of the gridded data file with high importance level is increased and the storage time of the gridded data file with low importance level is reduced; and deleting each gridded data file when corresponding storage time is elapsed. That is to say, in the embodiment of the present disclosure, time-sharing cleaning of different grid metadata is realized according to importance levels of the metadata.

The step S103 further includes: detecting whether there exist multiple pieces of grid metadata with repeated content in each gridded data file, if there exist the multiple pieces of grid metadata with the repeated content, namely at least two pieces of grid metadata are the same, compressing the multiple pieces of grid metadata with the repeated content, namely at least storing one of the multiple pieces of grid metadata and the quantity of the multiple pieces of grid metadata with the repeated content to reduce the data redundancy and avoid the repeated data from occupying excessive memory space. For example, assuming that pieces of grid metadata with serial numbers 1-50 are the same, "serial numbers 1-50" and one corresponding piece of "grid metadata", and a repetition number 50 are stored compressedly, in other words, 50 grids having the same content may be compressed into one grid, and only metadata in the one grid is stored.

The embodiment of the present disclosure can manage different gridded data files in different modes, namely more finely manage the data files generated by the system.

The gridded management on the data according to the embodiment of the present disclosure can be applied to various data for reference to realize fine management on the various data.

It will be understood by those of ordinary skill in the art that all or part of the steps in the method of the above embodiment may be implemented by related hardware instructed by one or more computer programs, these programs may be stored in a computer-readable storage medium, and during the execution of these programs, the steps S101 to S103 are included. The storage medium may be a ROM/RAM, a magnetic disk, an optical disk and the like.

### Embodiment 2

FIG. 2 is a flowchart of a data storage and maintenance method according to Embodiment 2 of the present disclosure. As shown in FIG. 2, the method include steps S201 to S204.

In step S201, a key element of data is identified.

Firstly, a type of data needing to be gridded is determined, where the data can be text or other formatted data; then, the key element such as a keyword of the data is identified.

This step is different for different systems, different companies and different users. Some element may be important for A, but may not necessarily be important for B. Therefore, the key element can be customized by the user according to needs.

For example, for an event stream recorded by a software system, the event stream has elements such as sequence number, time, generated module, event and result. Therefore, all elements of such an event stream are: sequence number, time, module, event and result.

In step S202, a data gridding strategy is determined and a new data storage mode is designed, where a data storage format in columns, a data storage format in rows or a data storage format in a mixture of columns and rows is selected according to situations.

The main purpose of determining the gridding strategy is to prepare for a later generation of different grid data. This step is critical and may determine whether subsequent steps can be effectively performed or not.

Taking the event stream recorded by the software system as an example, in a horizontal direction, splitting is carried out according to whether a result is fault or error, and in a vertical direction, splitting may be carried out according to module and time + event + result.

In step S203, different gridded data files are generated according to the determined data gridding strategy.

When editing a software, different save areas or files are designed for different generated metadata. But a keyword is also needed to guarantee the original complete data.

For example, taking the event stream as an example, the event stream has the following elements: sequence number, time, generated module, event and result. The sequence number + time + event may be saved as a file A, and the sequence number + result may be saved as a file B. A corresponding relationship of different elements is guaranteed by the same sequence number. That is, for the present example, the keyword of the complete data is the sequence number.

In an embodiment, log data is taken as an example. The log data is stream data, which is automatically generated by the system and records states, events and the like of the system. General logs all possess the following basic elements: sequence number, time, module, event, state (result), etc..

A storage strategy is implemented according to steps S201 to S203.

### 1) row data: stored according to categories and priorities.

For example, a format of original file data process.log is as follows:
number: time: initiating module: responding module: event: type
00001:2016/09/09/14:40:01:input_process:main_process:customer input: normal
00002:2016/09/09/14:40:01:main_process:output_process:main process has been operating: normal
00003:2016/09/09/14:40:01:output_process:display_process:display customer result: normal
00004:2016/09/09/14:40:02:display_process:fault_process:display customer result fault : monitor is not in service: error

According to different events, important events are split into different files for storage.

The above-mentioned example may be written into two following files:
process_error.log
process_normal.log

### 2) column data: stored according to a customized category.

Content of an original whole record is stored in different files according to customized rows and columns, and quantities of rows of the files correspond to each other. The files may be parsed by using a corresponding tool or checked according to rows.

In the above-mentioned example:
00001:2016/09/09/14:40:01:input_process:main_process:customer input: normal
00002:2016/09/09/14:40:01:main_process:output_process:main process has been operating: normal
00003:2016/09/09/14:40:01:output_process:display_process:display customer result: normal
00004:2016/09/09/14:40:02:display_process:fault_process:display customer result fault : monitor is not in service: error,
according to different categories of data, data of different categories is split into different files to be stored. The above-mentioned example may be written into two following files:
   process_event.log
   process_module.log

### 3) mixed storage of row data and column data - data gridding

The mixed storage is performed by combining the above described row-by-row storage and column-by-column storage, that is to say, the data is stored both in rows and in columns. Such data files are minimized and may be deleted in a more refined way. In this way, data gridding is achieved finally.

For example, the data is split into the following four files:
process_time001_event_error.log
process_time001_event_normal.log
process_time001_module_error.log
process_time001_module_normal.log

In step S204, a data management strategy is determined, for example, different management strategies such as storing, deleting and compressing are adopted for data in different grids.

After data gridding, multiple different data units are obtained. The data in each individual unit is of a certain type, and customized storage strategy, access strategy and cleaning strategy may be carried out on the certain type of data. For example, the information importance of a file A is low, so the file A will be quickly deleted. There exists much repeated data in a file B, so the file B may compressed for storage.

Different management strategies are adopted for different data. In the present embodiment, taking log data as an example, storage time for conventional data may be shortest, storage time for important data may be longest, and storage time for generally important data is between that for conventional data and that for important data. Taking mixed storage as an example, an order of durations of storage time is as follows:
process_time001_event_error.log >
process_time001_module_error.log >
process_time001_event_normal.log >
process_time001_module_normal.log >

For data that may have repeated content, the strategy of compressing may be used.

Since the data is stored according to elements and keywords in file names can represent the elements, in order to observe one element when retrieving, only the file or data of the element is used.

### Embodiment 3

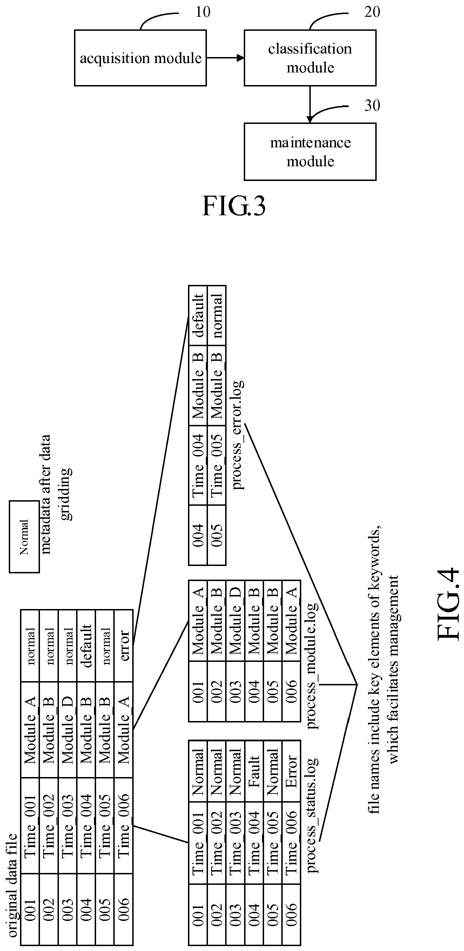

FIG. 3 is a schematic diagram of a data storage and maintenance device according to Embodiment 3 of the present disclosure. As shown in FIG. 3, the device includes an acquisition module 10, a classification module 20, and a maintenance module 30.

The acquisition module 10 is arranged to acquire source data generated by software running.

The classification module 20 is arranged to classify the source data to obtain multiple categories of grid metadata. That is to say, the classification module 20 is arranged to perform an analysis on the source data to obtain a key element representing a composition of the source data, and split the source data into grids by rows or by columns or by rows and columns according to the key element to obtain grid metadata. The key element includes at least one of time, operation, module, event, or result involved in the software running.

Reference may be made to FIG. 4, which is a schematic diagram of splitting an original data file after data gridding into new data files according to an embodiment of the present disclosure.

### 1. a case of storing by rows (i.e. splitting into grids by rows)

Several records of Sybase database are as follows:
I. 09/07 02:07:01. 0000331542 Txn 68477575 0 31929596
I. 09/07 02:07:01. 0000331542 Cmt 68477576
I. 09/07 02:07:01. 0000331542 PostCmt 0
I. 09/07 02:07:01. 0000331542 Disconnect: SA connHandle: 1000304284 SA connID: 16 IQ connID: 0000331542 User: dbo
I. 09/07 02:07:03. 0000331543 Txn 68477577 0 31929596
I. 09/07 02:07:03. 0000331543 Cmt 68477578
I. 09/07 02:07:03. 0000331543 PostCmt 0
I. 09/07 02:07:05. 0000331544 Txn 68477579 0 31929596
I. 09/07 02:07:05. 0000331544 Cmt 68477580
I. 09/07 02:07:05. 0000331544 PostCmt 0
I. 09/07 02:07:07. 0000331545 Txn 68477581 0 31929596
I. 09/07 02:07:07. 0000331545 Cmt 68477582
I. 09/07 02:07:07. 0000331545 PostCmt 0
I. 09/07 02:07:09. 0000331546 Txn 68477583 0 31929596
I. 09/07 02:07:09. 0000331546 Cmt 68477584
I. 09/07 02:07:09. 0000331546 PostCmt 0
I. 09/07 02:07:11. 0000331547 Txn 68477585 0 31929596
I. 09/07 02:07:11. 0000331547 Cmt 68477586
I. 09/07 02:07:11. 0000331547 PostCmt 0
I. 09/07 02:07:13. 0000331548 Txn 68477587 0 31929596
I. 09/07 02:07:13. 0000331548 Cmt 68477588
I. 09/07 02:07:13. 0000331548 PostCmt 0
I. 09/07 02:07:15. 0000331549 Txn 68477589 0 31929596
I. 09/07 02:07:15. 0000331549 Cmt 68477590
I. 09/07 02:07:15. 0000331549 PostCmt 0
I. 09/07 02:07:17. 0000331550 TxnT 68477591 31929616 31929616
I. 09/07 02:07:17. 0000331551 Collation 936ZHO, Case Respect, Blank Padding On, Comparisons are Conditioned
I. 09/07 02:07:17. 0000331550 Cmt 68477592
I. 09/07 02:07:17. 0000331550 PostCmt 0
I. 09/07 02:07:17. 0000331551 Txn 68477593 0 31929596
I. 09/07 02:07:17. 0000331551 Connect: SA connHandle: 1000304293 SA connID: 31 IQ connID: 0000331551 User: dbo
I. 09/07 02:07:17. 0000331551 ev_begintxn started
I. 09/07 02:07:17. 0000331551 Cmt 68477594

The records may be split into two files in the mode of storing by rows:
Sybase_normal.log
Sybase_process.log

Records in Sybase_normal.log are similar to general information in human memory, and include the following content:
I. 09/07 02:07:01. 0000331542 Txn 68477575 0 31929596
I. 09/07 02:07:01. 0000331542 Cmt 68477576
I. 09/07 02:07:01. 0000331542 PostCmt 0
I. 09/07 02:07:03. 0000331543 Txn 68477577 0 31929596
I. 09/07 02:07:03. 0000331543 Cmt 68477578
I. 09/07 02:07:03. 0000331543 PostCmt 0
I. 09/07 02:07:05. 0000331544 Txn 68477579 0 31929596
I. 09/07 02:07:05. 0000331544 Cmt 68477580
I. 09/07 02:07:05. 0000331544 PostCmt 0
I. 09/07 02:07:07. 0000331545 Txn 68477581 0 31929596
I. 09/07 02:07:07. 0000331545 Cmt 68477582
I. 09/07 02:07:07. 0000331545 PostCmt 0
I. 09/07 02:07:09. 0000331546 Txn 68477583 0 31929596
I. 09/07 02:07:09. 0000331546 Cmt 68477584
I. 09/07 02:07:09. 0000331546 PostCmt 0
I. 09/07 02:07:11. 0000331547 Txn 68477585 0 31929596
I. 09/07 02:07:11. 0000331547 Cmt 68477586
I. 09/07 02:07:11. 0000331547 PostCmt 0
I. 09/07 02:07:13. 0000331548 Txn 68477587 0 31929596
I. 09/07 02:07:13. 0000331548 Cmt 68477588
I. 09/07 02:07:13. 0000331548 PostCmt 0
I. 09/07 02:07:15. 0000331549 Txn 68477589 0 31929596
I. 09/07 02:07:15. 0000331549 Cmt 68477590
I. 09/07 02:07:15. 0000331549 PostCmt 0
I. 09/07 02:07:17. 0000331550 TxnT 68477591 31929616 31929616
I. 09/07 02:07:17. 0000331550 Cmt 68477592
I. 09/07 02:07:17. 0000331550 PostCmt 0
I. 09/07 02:07:17. 0000331551 Txn 68477593 0 31929596
I. 09/07 02:07:17. 0000331551 ev_begintxn started
I. 09/07 02:07:17. 0000331551 Cmt 68477594

Records in Sybase_process.log are similar to key information in human memory, and include the following content:
I. 09/07 02:07:01. 0000331542 Disconnect: SA connHandle: 1000304284 SA connID: 16 IQ connID: 0000331542 User: dbo
   I. 09/07 02:07:17. 0000331551 Collation 936ZHO, Case Respect, Blank Padding On, Comparisons are Conditioned
   I. 09/07 02:07:17. 0000331551 Connect: SA connHandle: 1000304293 SA connID: 31 IQ connID: 0000331551 User: dbo
2. a case of storing by columns (i.e. splitting into grids by columns)
   ORA-1654: unable to extend index MINOS_PM.I_PM_DATACOLLECTSTATE_NEMOI by 128 in tablespace MINOS_RNS_PM
   ORA-1654: unable to extend index MINOS_PM.I_PM_DATACOLLECTSTATE_NEMOI by 1024 in tablespace MINOS_RNS_PM
   ORA-1654: unable to extend index MINOS_PM.I_PM_DATACOLLECTSTATE_NEMOI by 1024 in tablespace MINOS_RNS_PM
   ORA-1653: unable to extend table MINOS_PM.PM_COLLECT_LOG_TABLE by 128 in tablespace MINOS_RNS_PM
   ORA-1653: unable to extend table MINOS_PM.PM_COLLECT_LOG_TABLE by 1024 in tablespace MINOS_RNS_PM
   ORA-1653: unable to extend table MINOS_PM.PM_COLLECT_LOG_TABLE by 128 in tablespace MINOS_RNS_PM
   ORA-1653: unable to extend table MINOS_PM.PM_COLLECT_LOG_TABLE by 1024 in tablespace MINOS_RNS_PM
   ORA-1653: unable to extend table MINOS_PM.PM_COLLECT_LOG_TABLE by 128 in tablespace MINOS_RNS_PM
   ORA-1653: unable to extend table MINOS_PM.PM_COLLECT_LOG_TABLE by 1024 in tablespace MINOS_RNS_PM
   ORA-1653: unable to extend table MINOS_PM.PM_COLLECT_LOG_TABLE by 128 in tablespace MINOS_RNS_PM

Due to the repeatability and the formatting of partial data, the data can be split into different columns for storage. If higher requirement is set for data storing, the repeated part can be simplified.

The records may be split into following three files in the mode of storing by columns:
Oracle_time001_error_id.log
Oracle_time001_trace.log
Oracle_time001_trace_table.log

### 3. a case of mixed storage (i.e. splitting into grids by rows and columns)

Different key elements are identified. By columns: ORA number, operation, module name, result; by rows: the rows are operated by the database in columns.
ORA-1654: unable to extend index MINOS_PM.IPM_DATACOLLECTSTATE_NEMOI by 128 in tablespace MINOS_RNS_PM
ORA-1654: unable to extend index MINOS_PM.I_PM_DATACOLLECTSTATE_NEMOI by 1024 in tablespace MINOS_RNS_PM
ORA-1654: unable to extend index MINOS_PM.I_PM_DATACOLLECTSTATE_NEMOI by 1024 in tablespace MINOS_RNS_PM
ORA-1653: unable to extend table MINOS_PM.PM_COLLECT_LOG_TABLE by 128 in tablespace MINOS_RNS_PM
ORA-1653: unable to extend table MINOS_PM.PM_COLLECT_LOG_TABLE by 1024 in tablespace MINOS_RNS_PM
ORA-1653: unable to extend table MINOS_PM.PM_COLLECT_LOG_TABLE by 128 in tablespace MINOS_RNS_PM
ORA-1653: unable to extend table MINOS_PM.PM_COLLECT_LOG_TABLE by 1024 in tablespace MINOS_RNS_PM
ORA-1653: unable to extend table MINOS_PM.PM_COLLECT_LOG_TABLE by 128 in tablespace MINOS_RNS_PM
ORA-1653: unable to extend table MINOS PM.PM_COLLECT_LOG_TABLE by 1024 in tablespace MINOS_RNS_PM
ORA-1653: unable to extend table MINOS_PM.PM_COLLECT_LOG_TABLE by 128 in tablespace MINOS_RNS_PM
QMNC started with pid=22, OS id=17048
Completed: ALTER DATABASE OPEN
alter database datafile '/datafile/emsdb/minos/UEP4X_FM_INDEX5.DBF' resize 2M Completed: alter database datafile '/datafile/emsdb/minos/UEP4X_FM_INDEX5.DBF' resize 2M
Data of different types, such as data shown above, can adopt a mixed storage mode, and a serial number is added to an identical row to serve as a mark of the identical row.
0001 ORA-1654: unable to extend index MINOS_PM.I_PM_DATACOLLECTSTATE_NEMOI by 128 in tablespace MINOS_RNS_PM
0002 ORA-1654: unable to extend index MINOS_PM.I_PM_DATACOLLECTSTATE_NEMOI by 1024 in tablespace MINOS_RNS_PM
0003 ORA-1654: unable to extend index MINOS_PM.I_PM_DATACOLLECTSTATE_NEMOI by 1024 in tablespace MINOS_RNS_PM
0004 ORA-1653: unable to extend table MINOS_PM.PM_COLLECT_LOG_TABLE by 128 in tablespace MINOS_RNS_PM
0005 ORA-1653: unable to extend table MINOS_PM.PM_COLLECT_LOG_TABLE by 1024 in tablespace MINOS_RNS_PM
0006 ORA-1653: unable to extend table MINOS_PM.PM_COLLECT_LOG_TABLE by 128 in tablespace MINOS_RNS_PM
0007 ORA-1653: unable to extend table MINOS_PM.PM_COLLECT_LOG_TABLE by 1024 in tablespace MINOS_RNS_PM
0008 ORA-1653: unable to extend table MINOS_PM.PM_COLLECT_LOG_TABLE by 128 in tablespace MINOS_RNS_PM
0009 ORA-1653: unable to extend table MINOS_PM.PM_COLLECT_LOG_TABLE by 1024 in tablespace MINOS_RNS_PM
0010 ORA-1653: unable to extend table MINOS_PM.PM_COLLECT_LOG_TABLE by 128 in tablespace MINOS_RNS_PM
0011 QMNC started with pid=22, OS id=17048
Completed: ALTER DATABASE OPEN
0012 alter database datafile '/datafile/emsdb/minos/UEP4X_FM_INDEX5.DBF' resize 2M Completed: alter database datafile '/datafile/emsdb/minos/UEP4X_FM_INDEX5.DBF' resize 2M

Partial content of the Oracle_time001_trace_operating.log is as follows:
0006 unable to extend table by 128 in tablespace MINOS_RNS_PM

Partial content of the Oracle_time001_trace_table.log is as follows:
0006 ORA-1653: MINOS_PM.PM_COLLECT_LOG_TABLE

Partial content of the Oracle_time001_messgage.log is as follows:
0012 alter database datafile '/datafile/emsdb/minos/UEP4X_FM_INDEX5.DBF' resize 2M Completed: alter database datafile '/datafile/emsdb/minos/UEP4X_FM_INDEX5.DBF' resize 2M

Different manners may be employed to manage different gridded data files.

The maintenance module 30 is arranged to synthesize the grid metadata of an identical category into a gridded data file and store and maintain the gridded data file.

For example, the maintenance module 30 may determine different storage time for different gridded data files according to importance levels of different gridded data files, and delete each gridded data file when corresponding storage time is elapsed. Taking the case of the above-mentioned storing by rows as an example, a deletion strategy may be as follows: the storage time of the Sybase_normal.log is set to be 30 days, and the storage time of the Sybase_process.log having process information and related database action information is set to be 90 days, thereby facilitating query of a developer and maintainer.

The maintenance module 30 may further determine whether repeated grid metadata exists in the gridded data file by detecting the grid metadata in the gridded data file, and compress the repeated grid metadata if the repeated grid metadata exists. Taking the above-mentioned case of storing in columns as an example, for the Oracle_error_id.log and the Oracle_trace_table.log, the repeated data can be directly compressed and stored, so merely the data in an identical period of time needs to be taken out and be formatted and aligned during data reading.

The maintenance module 30 may also search for a corresponding gridded data file according to the key element.

In summary, embodiments of the present disclosure have the following technical effects.
1. The embodiments of the present disclosure carry out fine management on the data or the files, and adopt different management modes for the data with different content.
2. The embodiments of the present disclosure can improve the storage efficiency of the system, improve the storage utilization rate and improve the retrieval efficiency, so that the system is more in line with thinking habits of natural human beings.

While the present disclosure has been described in detail, but is not limited to this. Those skilled in the art can make various modifications according to principles of the present disclosure. Therefore, modifications made in accordance with the principles of the present disclosure should be understood as falling within the scope of the present disclosure.

### INDUSTRIAL APPLICABILITY

The technical scheme provided by the embodiments of the present disclosure can be applied to the field of computers. According to the embodiments of the present disclosure, the data is stored in gridded manner to realize the high-efficiency storage of the data and to avoid the data redundancy and repeated storage. According to the embodiments of the present disclosure, different cleaning strategies are adopted for different gridded data files to flexibly store and clean the data. According to the embodiments of the present disclosure, the corresponding gridded data files can be searched via key elements or key words to realize high-efficiency retrieval. The embodiments of the present disclosure are suitable for storing and maintaining the data generated by software running.

## Claims

1. A data storage and maintenance method, comprising:
acquiring source data generated by software running;
classifying the source data to obtain a plurality of categories of grid metadata; and
synthesizing the grid metadata of an identical category into a gridded data file, and storing and maintaining the gridded data file.

2. The method of claim 1, wherein the classifying the source data to obtain the plurality of categories of grid metadata comprises:
performing an analysis on the source data to obtain a key element representing a composition of the source data, wherein the key element comprises at least one of time, operation, module, event, or result involved in the software running; and
splitting the source data into grids according to the key element to obtain grid metadata..

3. The method of claim 2, wherein a splitting manner of splitting the source data into grids according to the key element comprises: splitting by row, splitting by column, and a mixture of splitting by row and splitting by column.

4. The method of claim 2 or 3, wherein the step of storing and maintaining the gridded data file comprises:
determining different storage time for different gridded data files according to importance levels of different gridded data files, and deleting each gridded data file when corresponding storage time is elapsed.

5. The method of claim 2 or 3, wherein the step of storing and maintaining the gridded data file further comprises:
detecting whether there exist a plurality of pieces of grid metadata with repeated content in each gridded data file, and if there exist the plurality of pieces of grid metadata with the repeated content, at least storing one of the plurality of pieces of grid metadata and the quantity of the plurality of pieces of grid metadata with the repeated content.

6. A data storage and maintenance device, comprising:
an acquisition module, configured to acquire source data generated by software running;
a classification module, configured to classify the source data to obtain a plurality of categories of grid metadata; and
a maintenance module, configured to synthesize the grid metadata of an identical category into a gridded data file and store and maintain the gridded data file.

7. The device of claim 6, wherein the classification module is configured to perform an analysis on the source data to obtain a key element representing a composition of the source data, and split the source data into grids according to the key element to obtain grid metadata, wherein the key element comprises at least one of time, operation, module, event, or result involved in the software running.

8. The device of claim 7, wherein a splitting manner that the classification module is configured to split the source data into grids according to the key element comprises: splitting by row, splitting by column, and a mixture of splitting by row and splitting by column.

9. The device of claim 6 or 7, wherein the maintenance module is configured to determine different storage time for different gridded data files according to importance levels of different gridded data files, and delete each gridded data file when corresponding storage time is elapsed.

10. The device of claim 6 or 7, wherein the maintenance module is configured to detect whether there exist a plurality of pieces of grid metadata with repeated content in each gridded data file, and if there exist the plurality of pieces of grid metadata with the repeated content, at least store one of the plurality of pieces of grid metadata and the quantity of the plurality of pieces of grid metadata with the repeated content.

11. A computer storage medium, configured to store one or more computer-executable programs, wherein when executed by a computer, the one or more computer-executable programs are configured to cause the computer to execute the method of any one of claims 1 to 5.
